# EUROPEAN PATENT SPECIFICATION

(11) **EP 1 997 176 B1**
(45) Date of publication and mention of the grant of the patent: **19.02.2020**
(21) Application number: 07779831.2
(22) Date of filing: 16.03.2007
(51) Int. Cl.: H01M 8/00, H01M 4/02, H01M 2/06, H01M 2/08, H01M 6/40

(54) **METAL FILM ENCAPSULATION**
METALLFOLIENKAPSELUNG
ENCAPSULATION PAR FILM MÉTALLIQUE

(30) Priority: 16.03.2006 US 782792 P
(43) Date of publication of application: 03.12.2008
(73) Proprietor: Sapurast Research LLC, Wilmington, DE 19801 (US)
(72) Inventor: SNYDER, Shawn W., Golden, Colorado 80401 (US); NEUDECKER, Bernd J., Littleton, Colorado 80127 (US); BRANTNER, Paul C., Conifer, Colorado 80433 (US)
(74) Representative: Barnfather, Karl Jon
(86) International application number: PCT/US2007/064119
(87) International publication number: WO 2007/106910

(56) References cited:
- US-A- 2 970 180
- US-A1- 2002 028 377
- US-A1- 2002 028 377
- US-A1- 2005 266 161
- US-B1- 6 402 795
- US-B2- 6 723 140
- US-B2- 6 916 679

## Description

### RELATED APPLICATIONS

The present application claims the benefit under 35 U.S.C. § 119 of U.S. Patent Application Serial No. 60/782,792, filed March 16, 2006; and is a continuation-in-part, and claims the benefit under 35 U.S.C. § 120, of U.S. Patent Application Serial No. 11/561,277, filed November 17, 2006, which claims the benefit under 35 U.S.C. § 119 of U.S. Patent Application Serial No. 60/737,613, filed November 17, 2005, U.S. Patent Application Serial No. 60/759,479 filed January 17, 2006, and U.S. Patent Application Serial No. 60/782,792, filed March 16, 2006, and is a continuation-in-part, and claims the benefit under 35 U.S.C. § 120, of U.S. patent application Serial No. 11/209,536, filed August 23, 2005; which is a continuation, and claims the benefit under 35 U.S.C. § 120, of U.S. Patent Application Serial No. 11/374,282, converted from U.S. provisional application Serial No. 60/690,697, and filed June 15, 2005; which is a continuation-in-part, and claims the benefit under 35 U.S.C. § 120, of U.S. Patent Application Serial No. 10/215,190, filed August 9, 2002, now U.S. Patent No. 6,916,679, issued 12 July 2005.

### FIELD OF THE INVENTION

The field of this invention is the device, composition, method of depositing, fabrication, and more specifically encapsulation of solid-state, thin-film, secondary and primary batteries.

### BACKGROUND

Typical electrochemical devices comprise multiple electrically active layers such as an anode, cathode, electrolyte, substrate, current collectors, etc. Some layers, such as, for example, an anode layer comprising Lithium, are comprised of materials that are very environmentally sensitive. Such batteries require an encapsulation to protect such environmentally sensitive material. Some schemes used to encapsulate the sensitive layers of electrochemical devices, such encapsulation with gold foil, are expensive. Other schemes encapsulate the device with pouch, for example, made of metal and plastic, that seals around the perimeter of the device. As the temperature changes the air within the metal and plastic pouch expands and/or contracts. This expansion and/or contraction may blow out the seals of the metal and plastic pouch or create other problems, thus eliminating the encapsulating benefits of the pouch.

Typical electrochemical devices also have tabs that extend out from the substrate. These tabs provide electrically conductive contact points for the battery. These tabs can be fragile and can break when gripped or secured from the outside and create difficulties when trying to design the encapsulation to maintain a proper seal around the tabs.

Thus, there is a need in the art to provide for better and cheaper encapsulating approaches and better approaches to providing electrically conductive contacts, including encapsulation that is substantially thinner than known encapsulation methods.

### SUMMARY

One exemplary embodiment of the present invention includes a battery as defined in claim 1. Preferred embodiments are defined in claims 2-11.

The bonding layer is be selectively conductive through the embedded conductor. The cell structure is further be in selective electrical contact with the first electrical contact via the embedded conductor.

The first electrical contact may, for example, include an encapsulate metal. The second electrical contact may, for example include a substrate. The bonding layer may be an adhesive material, an insulating material, a plastic, glass, and/or fiberglass. The conductor may be a tab, a wire, multiple wires, a wire mesh, perforated metal, a metal coating applied to the adhesive layer, or a disk. The conductor may be woven within the bonding layer and the bonding layer may include a slit within which the embedded conductor is woven. The bonding layer may be an adhesive material containing one or more conductive portions that may be, for example, conductive powders, bodies or particles applied to one or more selected areas. The first and second contacts may be made from a conductive material such as, for example, gold, platinum, stainless steel, titanium, zirconium, cobalt, aluminum, indium, nickel, copper, silver, carbon, bronze, brass, beryllium, and/or oxides, nitrides, and alloys thereof. An insulating layer on the first and/or second contact may also be included. The insulating layer may be, for example, a plastic. The cell structure may include an anode, an electrolyte; a cathode, and a barrier layer. The cathode may, for example, not be annealed or annealed using rapid thermal anneal methods.

Another exemplary embodiment of the present invention includes a method of manufacturing a thin film battery, according to any one of claims 1 to 11, having, in no particular order, the steps of creating a selectively conductive bonding layer; coupling the bonding layer with a first contact layer; coupling a first side of a cell structure with a second contact layer; and coupling a second side of the cell structure with the bonding layer. Alternate steps may include creating a cell structure with an anode, cathode, and electrolyte layers; embedding a conductor within the bonding layer; weaving at least one conductive wire through the bonding layer wherein selective portions of the conductive wire are exposed; heating the bonding layer and compressing the conductor within the bonding layer; and insulating the battery with an insulating material. A reinforcement layer including KEVLAR®, fiberglass, plastic, glass or other insulating material may also be embedded within the bonding layer. This reinforcement layer is selectively conductive.

### BRIEF DESCRIPTION OF THE FIGURES

FIG. 1A shows a top view of an electrochemical device according to an exemplary embodiment of the present invention.
FIG. 1B shows a side view of an electrochemical device according to an exemplary embodiment of the present invention.
FIG. 2A shows a perspective view of one corner of an electrochemical device with a notch in the electrochemical device according to an exemplary embodiment of the present invention.
FIG. 2B shows a perspective view of one corner of an electrochemical device with a notch in the encapsulation layer according to an exemplary embodiment of the present invention.
FIG. 3A shows a top view of an electrochemical device with a configuration of holes in the metal encapsulation according to an exemplary embodiment of the present invention.
FIG. 3B shows a top view of an electrochemical device with another configuration of holes in the metal encapsulation according to an exemplary embodiment of the present invention.
FIG. 4A shows a top view of an electrochemical device with holes in the contacts according to an exemplary embodiment of the present invention.
FIG. 4B shows a side view of an electrochemical device with holes in the contacts according to an exemplary embodiment of the present invention.
FIG. 5A shows a side view of an electrochemical device with an electrochemical device on each side of the metal film encapsulation according to an exemplary embodiment of the present invention.
FIG. 5B shows a perspective view of an electrochemical device with an electrochemical device on each side of the metal film encapsulation according to an exemplary embodiment of the present invention.
FIG. 5C shows a perspective view of an electrochemical device with a notched metal film encapsulation between two devices according to an exemplary embodiment of the present invention.
FIG. 6 shows a plurality of electrochemical devices stacked with metal foil in between according to an exemplary embodiment of the present invention.
FIG. 7 shows an electrochemical device with a notch and tab on the side of the electrochemical device according to an exemplary embodiment of the invention.
FIG. 8 shows an electrochemical device with a substrate, cathode, electrolyte, anode and a metal foil encapsulation according to an exemplary embodiment of the invention.
FIG. 9A shows the electrochemical device of FIG. 2A with an insulating layer according to an exemplary embodiment of the invention.
FIG. 9B shows the electrochemical device of FIG. 2B with an insulating layer according to an exemplary embodiment of the invention.
FIG. 10 shows two electrochemical devices with three metal foils according to an exemplary embodiment of the invention.
FIG. 11A shows a side view electrochemical device with electrical contacts as an encapsulate and substrate according to an exemplary embodiment of the present invention.
FIG. 11B shows a top view electrochemical device with electrical contacts as an encapsulate and substrate according to an exemplary embodiment of the present invention.
FIG. 11C shows a top view of the electrochemical device of FIG. 11B with partial cuts in the encapsulation according to an exemplary embodiment of the present invention.
FIG. 11D shows a top view of the electrochemical device of FIG. 11C having resulting strips folded over according to an exemplary embodiment of the present invention.
FIG. 12A shows a side view of a stand alone conductor according to an exemplary embodiment of the present invention.
FIG. 12B shows top views of stand alone conductors according to an exemplary embodiment of the present invention.
FIG. 13A shows a side view of a bonding layer with a slit cut therein according to an exemplary embodiment of the present invention.
FIG. 13B shows a top view of a bonding layer with a slit cut therein according to an exemplary embodiment of the present invention.
FIG. 14A shows a side view of a conductor woven through a bonding layer according to an exemplary embodiment of the present invention.
FIG. 14B shows a top view of a mesh wire conductor woven through a bonding layer according to an exemplary embodiment of the present invention.
FIG. 15A shows a side view of a conductor embedded within a bonding layer according to an exemplary embodiment of the present invention.
FIG. 15B shows a top view of a mesh wire conductor embedded within a bonding layer according to an exemplary embodiment of the present invention.
FIG. 16A shows a side view of a first contact layer according to an exemplary embodiment of the present invention.
FIG. 16B shows a top view of a first contact layer according to an exemplary embodiment of the present invention.
FIG. 17A shows a side view of a first contact layer bonded with the bonding layer according to an exemplary embodiment of the present invention.
FIG. 17B shows a top view of a first contact layer bonded with the bonding layer according to an exemplary embodiment of the present invention.
FIG. 18A shows a side view of a cell structure on a second contact layer according to an exemplary embodiment of the present invention.
FIG. 18B shows a top view of a cell structure on a second contact layer according to an exemplary embodiment of the present invention.
FIG. 19A shows a side view of the first contact and bonding layer of FIG. 17A coupled with the cell structure and second contact of FIG. 18A according to an exemplary embodiment of the present invention.
FIG. 19B shows a top view of the first contact and bonding layer of FIG. 17B coupled with the cell structure and second contact of FIG. 18B according to an exemplary embodiment of the present invention.

### DETAILED DESCRIPTION

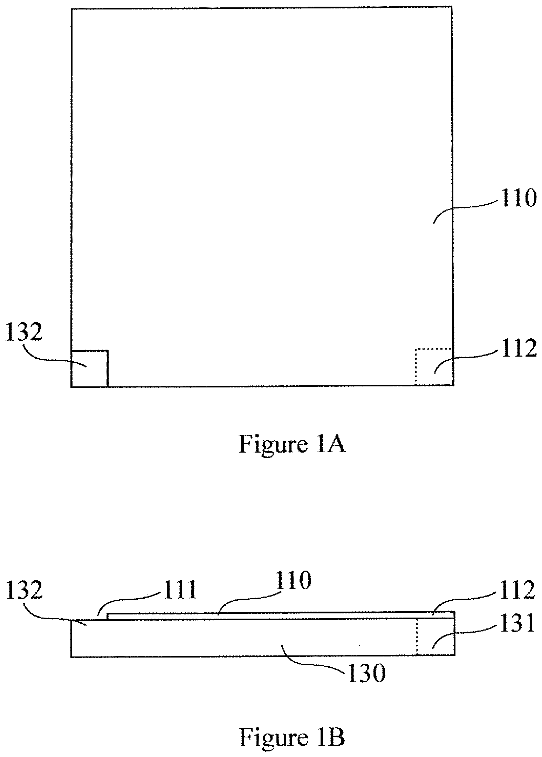

FIG. 1A shows a top view of one exemplary embodiment. FIG. 1B shows a side view of this embodiment. As shown in the figures, this embodiment comprises an electrochemical device 130 and a metal encapsulation layer 110. The electrochemical device 130 may comprise any number of materials or layers. The electrochemical device 130 may also comprise a battery. For example, the electrochemical device 130 may comprise an anode, cathode, electrolyte, current collectors, substrate, etc. Some materials may, for example, comprise Lithium, LiCoO₂, LIPON, gold, platinum, stainless steel, titanium, zirconium, cobalt, aluminum, indium, nickel, copper, silver, carbon, bronze, brass, beryllium, and/or oxides, nitrides, and alloys thereof. Furthermore, the electrochemical device 130 may be a thick film device.

The metal foil may, for example, be less than 100 microns in thickness. In another embodiment the metal foil may be less than 50 microns and in a specific embodiment the metal foil may be less than 25 microns.

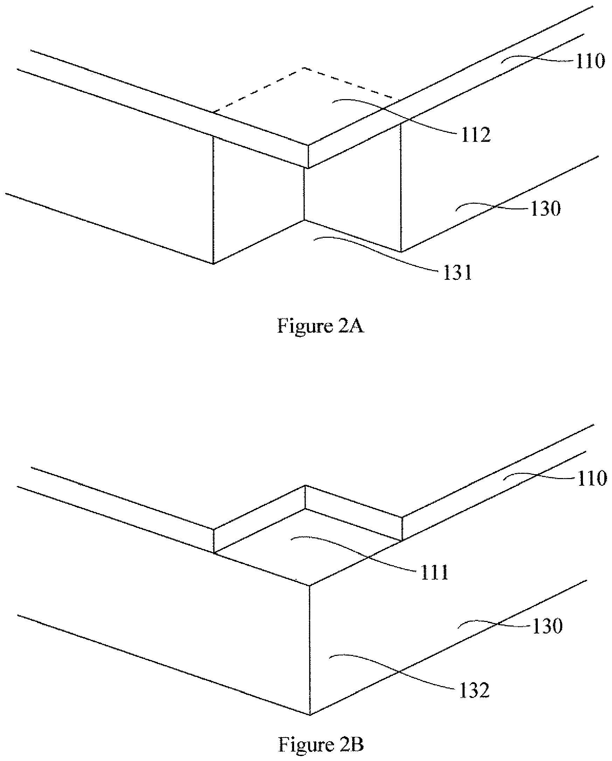

The electrochemical device 130 may comprise at least one notch 131. The electrochemical device 130 shown in FIG. 1A, 1B, 2A and 2B comprises a single notch 131, and the encapsulation layer 110 also includes a notch 111. These notches 111, 131 may be of any shape or size. The electrochemical device 130 or the encapsulation layer 110 may comprise any number of notches. The metal encapsulation layer 110 extends over the notch 131 in the electrochemical device 130 providing an encapsulation contact tab 112. This contact tab 112 extends over the open area left by the notch 131. The contact tab 112 may provide a convenient electrically conductive contact for the device. In a similar fashion, the electrochemical device may extend under the notch 111 in the metal encapsulation layer 110 providing a contact tab 132.

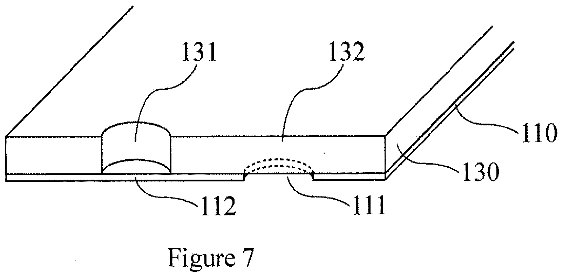

FIG. 2A and FIG. 2B show perspective views of the embodiment shown in FIG. 1A and FIG. 1B. FIG. 2A shows an electrochemical device 130, a metal encapsulating layer 110, a notch 131 in the electrochemical device 130, and a contact tab 112 in the encapsulation layer 110. FIG. 2B shows an electrochemical device 130, a metal encapsulating layer 110, a notch 111 in the encapsulation 110 and the contact tab 132 in the electrochemical device 130. Although these figures show notches 131, 111 on the corner of the device, they may be in any location. One such exemplary configuration is shown in FIG. 7A with a notch on the side of the device. Also, the notch is not necessarily square. For instance, the notch shown in FIG. 7A is round, whereas those shown in FIG. 1A, 1B, 2A and 2B are rectangular notches.

The metal foil layer 110 may be adapted to encapsulate the electrochemical device 130. This encapsulation may, for example, protect the electrochemical device 130 from damaging environmental effects. For example, many electrochemical devices comprise environmentally sensitive materials such as Lithium. These materials can be extremely reactive with air and moisture, and may degrade when exposed to such environments. Accordingly, the metal foil encapsulate layer 110 may protect environmentally sensitive materials in the electrochemical device from air and/or moisture.

The metal foil encapsulate layer 110 in an exemplary embodiment of the present invention may lie over a substrate layer in the electrochemical device 130. An electrochemical device may include a number of layers, for example, a substrate, cathode, electrolyte, and anode. Such a device may be encapsulated with a metal foil deposed on the substrate, and may also include contact tabs. The metal foil, therefore, may provide contacts that are secure, durable and may be incorporated at any location in the device. Because the contacts are part of the metal foil, they are less likely to break or shear from the substrate.

The metal foil layer, in an exemplary embodiment of the present invention, may comprise the cathode.

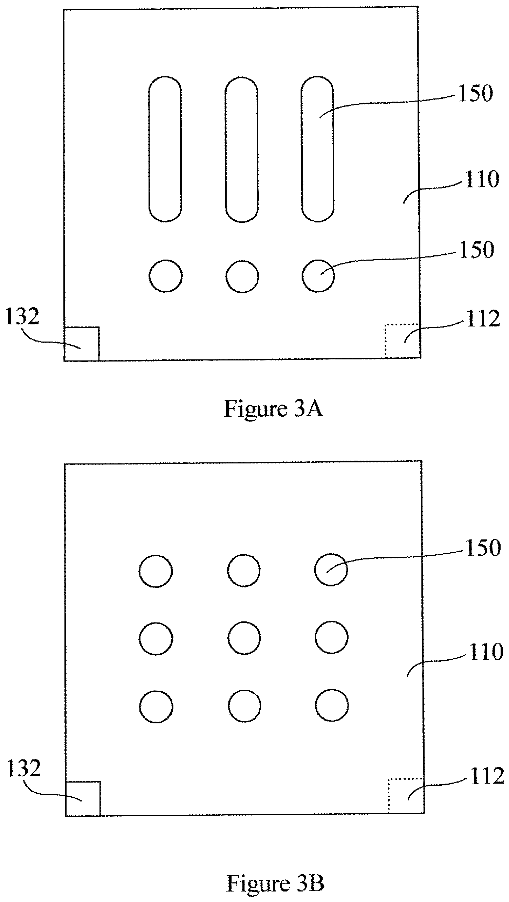

FIG. 3A and FIG. 3B show top views of an exemplary embodiment of the present invention. In this embodiment, the metal foil encapsulation 110 comprises openings 150. These openings 150 may, for example, provide contact or access to layers in the electrochemical device. For example, these openings 150 may provide direct access to the substrate in the electrochemical device. These openings 150 may be of any size or configuration. Shown in the figures are exemplary circle and oval openings. Depending on the application a plurality of openings may be required or a single opening may suffice.

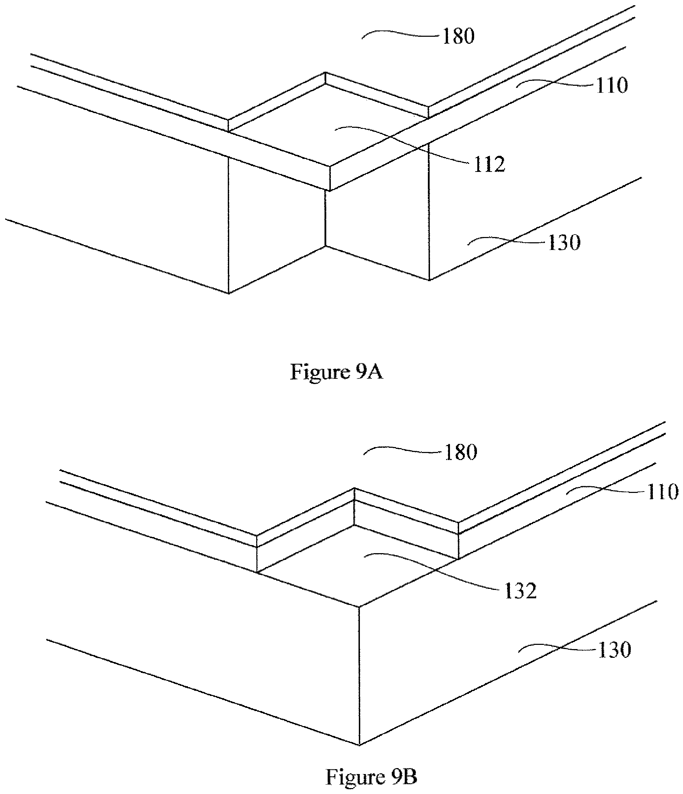

FIG. 9A shows the embodiment of FIG. 2A with an insulating layer 180 on the metal foil 110 and FIG. 9B shows the embodiment of FIG. 2B with an insulating layer 180 on the metal foil 110. The insulating layer 180 protects the metal foil 110 from unwanted electrical contacts. In FIG. 9A and FIG. 9B the tab 112, 132 portions are the only portion that are not covered with the insulating layer 180 allowing electrical contact only on the tabs 112, 132.

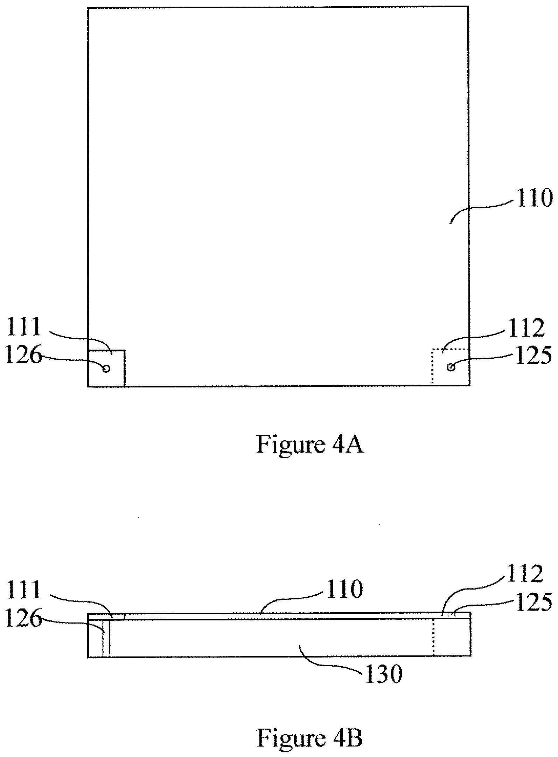

FIG. 4A and FIG. 4B show an exemplary embodiment of the present invention. This embodiment comprises a hole 126 in the contact tab 132 and a hole 125 in the encapsulate tab 112. Accordingly, these holes 125, 126 may, for example, provide a more secure contact point. Other devices may grip the contact through holes 125, 126.

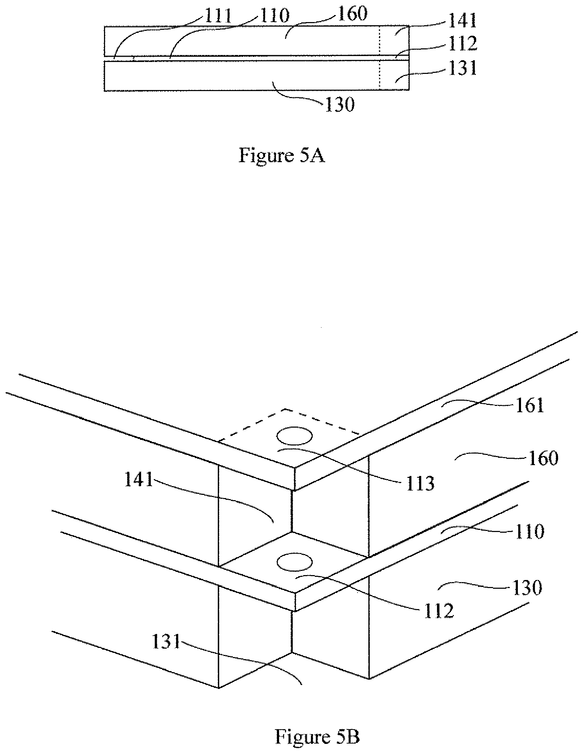

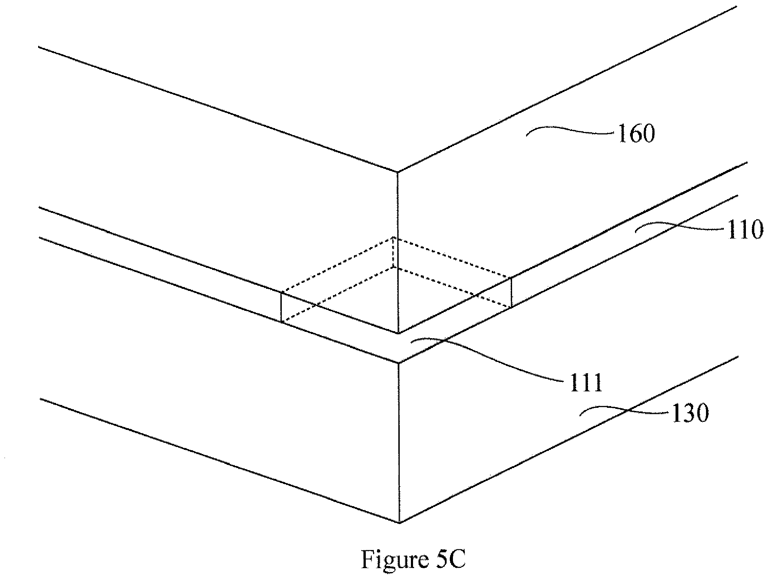

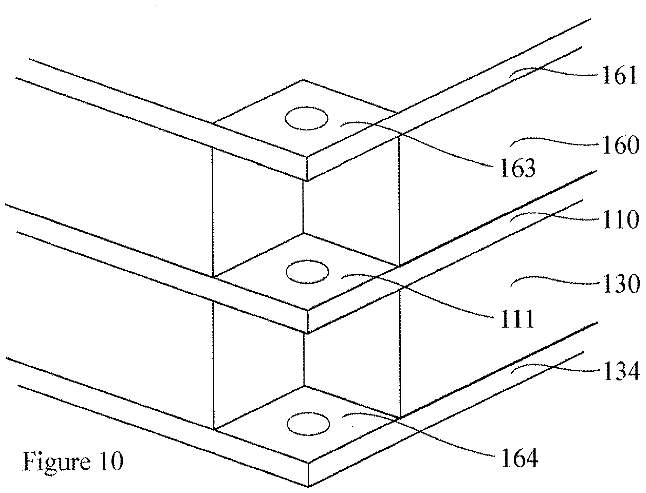

FIG. 5A, FIG. 5B, and FIG. 5C show an exemplary embodiment of the present invention. This embodiment comprises two electrochemical devices 130, 160 with a single metal foil encapsulation layer 110 between the two devices. In this embodiment, for example, the metal foil 110 may comprise the cathode for both electrochemical devices 130, 160. Furthermore, in another embodiment the metal foil 110 may be electrically conductive to the substrate of the electrochemical devices 130, 160. This embodiment may also include an encapsulation layer 161 on the top of electrochemical device 160 as shown in FIG. 5B. In FIG. 10 a third metal foil 134 is also included.

FIG. 5B is a perspective view of the right side of FIG. 5A with a second encapsulation layer 161. As shown the two electrochemical devices 130, 160 have notches 131, 141 and there is an extending tab 112 in the encapsulate layers 110, 113.

FIG. 5C is a perspective view of the left side of FIG. 5A and shows a notch 111 in the encapsulate 110 and tabs in both electrochemical devices.

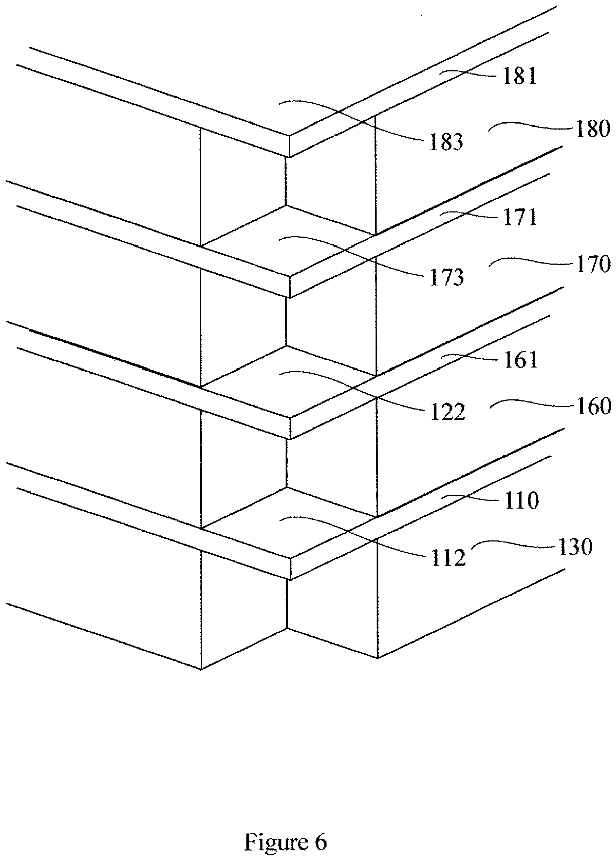

FIG. 6 shows a plurality of electrochemical devices 130, 160, 170, 180 stacked one upon another with metal foil layers 110, 161, 171 between and a metal encapsulate 181 on the top. Although this figure shows four electrochemical devices 130, 160, 170, 180, the invention is not limited by the number of devices that may be stacked. Any number of devices may be stacked without deviating from the invention. This embodiment also shows four tabs 112, 122, 173, 183 in the encapsulation layers.

FIG. 7 shows an exemplary embodiment of the present invention. In this embodiment an electrochemical device 130 has a notch 131 and a tab 132. On the bottom of the electrochemical device 130 is an encapsulation layer 110, which includes a tab 112 and a notch 111. The notches 111, 131 are circular and placed on the same side of the device.

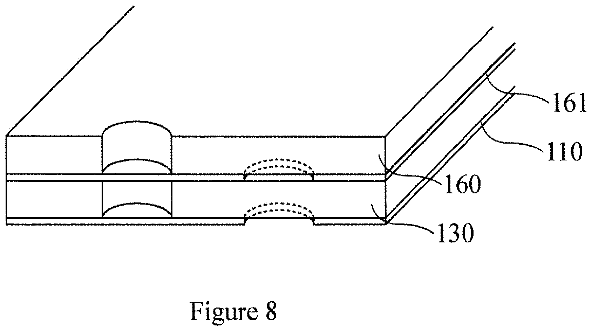

FIG. 8 shows a embodiment similar to that shown in FIG. 7 with circular notches in both the encapsulate 110 and the electrochemical cell 130. This exemplary embodiment shows a second electrochemical device 160 and a second encapsulation layer 161.

In an exemplary embodiment of the present invention, a metal foil may lay over an electrochemical device. This metal foil encapsulates the electrochemical device and protects it from environmental harm. The metal foil also provides tabs that are conductively contacted with the substrate of the device.

In an exemplary embodiment of the present invention, the electrochemical device comprises LiCoO₂. In this embodiment, the device is treated with a rapid thermal anneal. For example, the device is brought up to approximately 700° C over a period of six minutes. The device is then held at this temperature for approximately five minutes and then quickly cooled to room temperature in about six minutes. This rapid thermal annealing crystallizes the LiCoO₂ so that it may be used without a barrier layer. The period of time may vary up to 30 minutes or even down to 10 seconds.

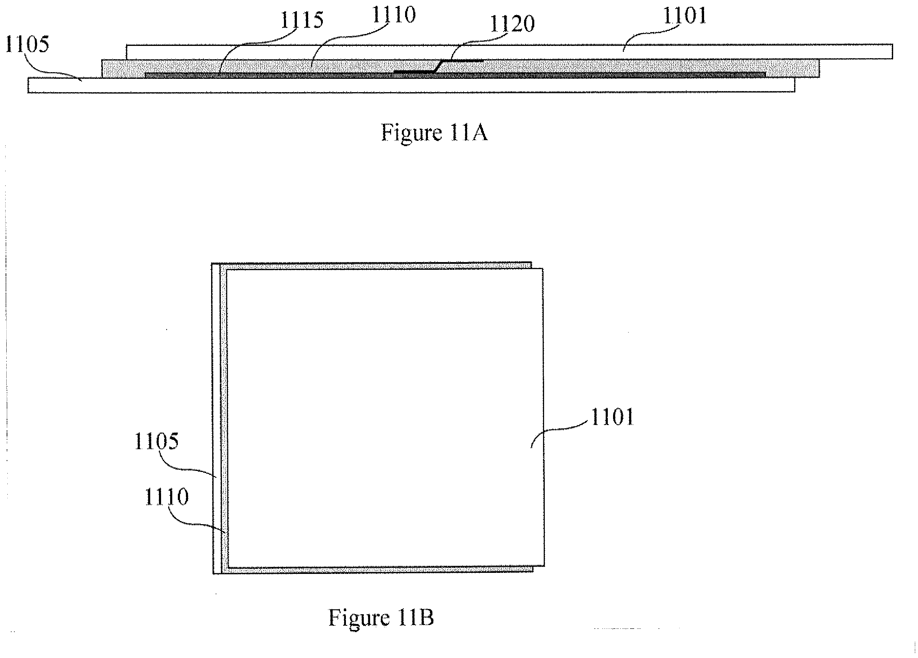

FIG. 11A shows a side view of an electrochemical device according to an exemplary embodiment of the present invention. In this embodiment, a first contact 1101 is coupled with bonding layer 1110 with a portion of the first contact 1101 extending past the bonding layer 1110. The bonding layer 1110 may also be bonded with the cell structure 1115. A second contact 1105 is placed under the cell structure 1115. A barrier layer, for example, may also be placed between the second contact 1105 and the cell structure 1115. Shown embedded within the bonding layer 1110 is conductor 1120. This conductor 1120, for example, creates a selectively conductive bonding layer. A selectively conductive bonding layer 1110 permits conduction from the cell structure 1115 through the bonding layer 1110 to the first contact 1101 at specific points, and yet provides insulation between the first contact 1101 and the second contact 1105.

The conductor 1120 may be placed within the bonding layer 1110 in many different ways. For example, a metal tab, a metal wire, multiple metal wires, a metal wire mesh, perforated metal foil, perforated metal, a metal coating applied to the adhesive layer, a metallic disk, a metallically coated fiberglass or combinations thereof may be used. In each of these examples, the conductor 1120 can provide electrical conduction between the cell structure 1115 and the first contact 1101 and yet provide insulation between the two contacts 1101, 1105. In some embodiments the conductor 1120 may be woven within the bonding layer 1110. The conductor 1115 may be, for example, disks embedded within the bonding layer 1110. In some embodiments slits within the bonding layer 1110 may be made in order to weave or place the conductor 1120 through the bonding layer 1110. Also, for example, holes or other means may be used to place the conductor 1120 through the bonding layer 1110.

In an exemplary embodiment, a reinforcement layer may be placed within the insulating layer. For example, a fiberglass material may cover half of one surface of the insulating layer, woven through the layer and then cover the other half of the bonding layer. Such a layer of fiberglass without a conductive coating would insulate the materials placed between. The fiberglass may be coated in a localized area with a conductive material. Such conductive coatings can coat the fiberglass area at the top and bottom surface of the bonding layer. In such an embodiment, for example, the fiberglass would conduct between the upper contact and the cell. Conductive material may be disposed on the fiberglass using ink jet, silk screen, plasma deposition, e-beam deposition, spray and/or brush methods. Other materials may be used rather than fiberglass, such as, for example, KEVLAR®, plastic, glass or other insulating materials.

An exemplary embodiment of the present invention provides for selective contact between the first contact and the cell structure through holes in the bonding layer. In such an embodiment, holes in the bonding layer may allow the first contact and cell structure to remain in contact. The layers may be, for example, pressed together to create a contact. Alternatively, conductive glues or inks may be applied in or near the hole area in the bonding layer to make the contact between the layers. Lithium may also be used as a conductive material.

The conductor 1120, for example, may be made of gold, platinum, stainless steel, titanium, zirconium, cobalt, aluminum, indium, nickel, copper, silver, carbon, bronze, brass, beryllium, or oxides, nitrides, and alloys thereof.

FIG. 11B shows a top view of the exemplary embodiment shown in FIG. 11A. As shown in FIG. 11B the first contact 1101 extends past the bonding layer 1110 and the second contact 1105. Likewise, for example, the second contact 1105 also extends past the boding layer 1115 and the first contact 1101 in the opposite direction.

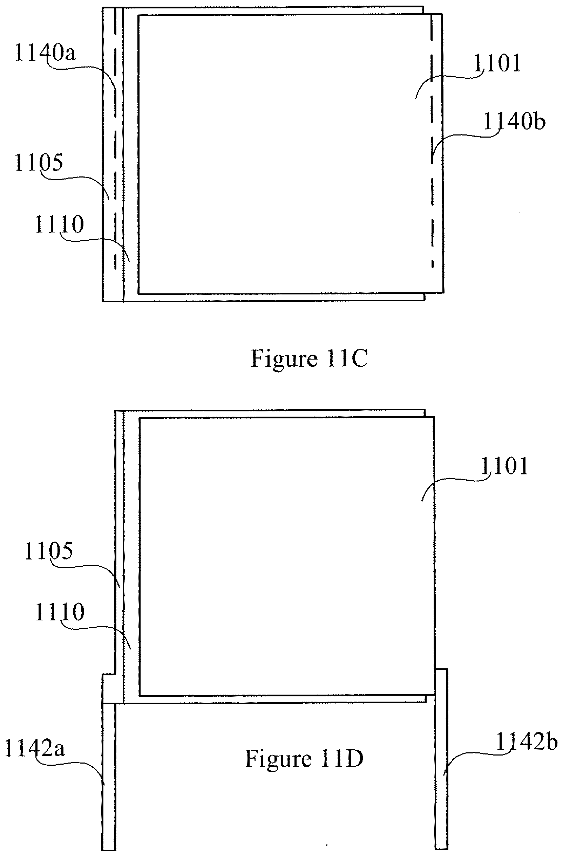

FIGS. 11C and 11D show an exemplary embodiment in which leads are formed from the first and second contacts 1101, 1105. As shown in FIG. 11C, a first partial cut 1140a is made in the first contact 1101 and a partial cut 1140b is made in the second contact 1105. These partial cuts form strips that may be folded over to extend from the electrochemical device. For instance, Figure 11D shows an example in which strips 1142a and 1142b resulting from the partial cuts in the contacts 1101, 1105 are folded in a downward direction of the drawing. It should be appreciated that only one or both of the extending parts of the contacts 1101, 1105 can be partially cut to form leads in a variety of ways for a desired application or orientation of the electrochemical device.

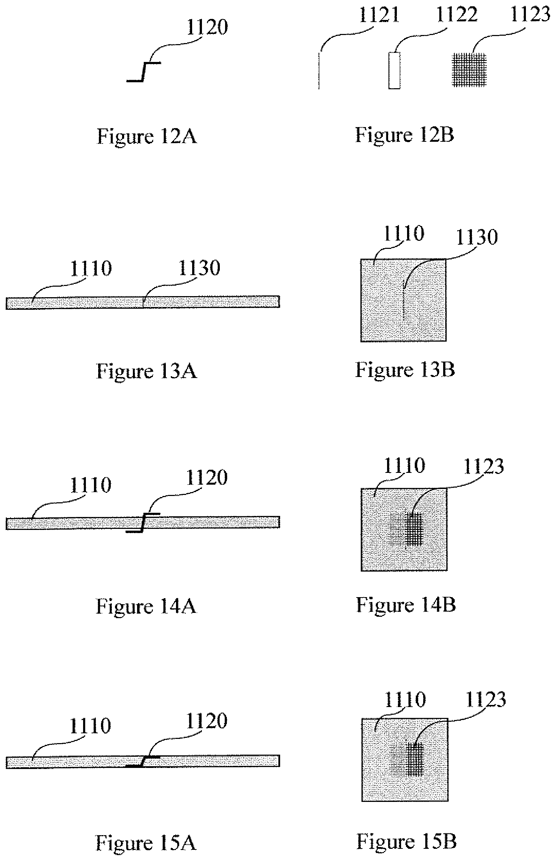

For purposes of explaining the exemplary embodiments shown in FIGS. 11A - 11D, FIGS. 12A - 19B show individual layers and parts of this embodiment and how they can be coupled or bonded together. These figures are not meant to show a step-by-step process for manufacturing any embodiments of the invention. Rather, these figures are presented to help understand how the layers interact. FIGS. 12A, 13A, 14A, 15A, 16A, 17A, 18A and 19A show side views of various parts of an exemplary battery, and FIGS. 12B, 13B, 14B, 15B, 16B, 17B, 18B and 19B show top views.

FIG. 12A shows a side view of a conductor 1120 according to one embodiment of the present invention. The top view of three exemplary types of conductors, a wire 1121, a tab 1122, and a wire mesh 1123, are shown in FIG. 12B. FIG. 13A shows a side view and FIG. 13B shows a top view of a slit 1130 cut within a bonding layer 1110. FIG. 14A shows a side view of a conductor 1120, for example, woven through the bonding layer. FIG. 14B shows a top view of a mesh wire conductor 1123 woven through the bonding layer 1110. FIG. 15A shows the conductor 1120 embedded within the bonding layer. The conductor 1120 may be embedded within the bonding layer 1110, for example, by heating the bonding layer 1110 to the point where the conductor 1120 may be pressed within the bonding layer 1110. The surfaces of the conductor 1120 and bonding layer 1110 may preferably be flush after this process. FIG. 15B shows a top view of a wire mesh conductor 1123 embedded within the bonding layer.

The resultant bonding layer 1110 from FIGS. 12A-15B show a bonding layer with insulating properties yet provides selective conductivity between the portions of the top surface and the lower surface of the bonding layer 1120. Other combination may also produce selective conductivity.

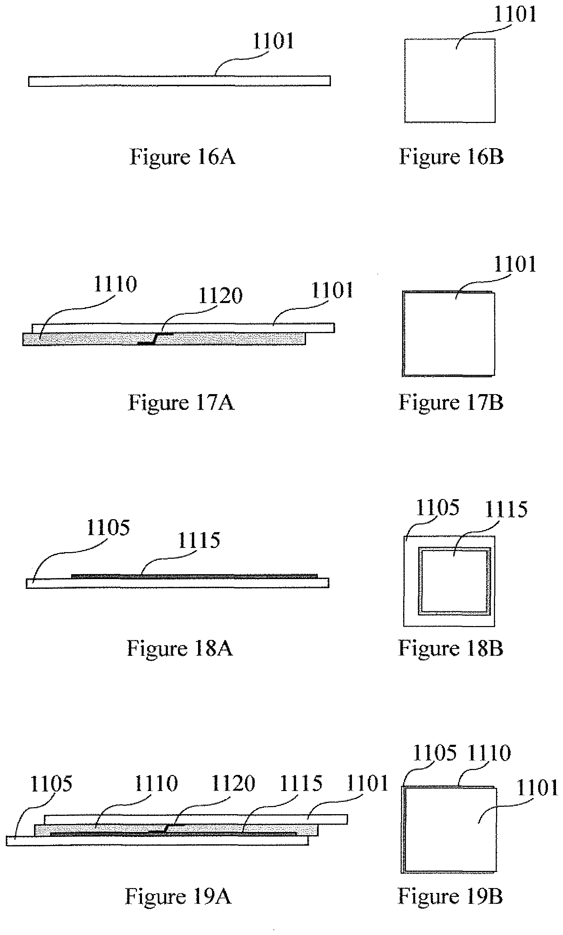

FIG. 16A and FIG. 16B show a first contact 1101. FIG. 17A shows the first contact 1101 bonded with the bonding layer 1110. Note that in this embodiment the conductor 1120 preferably makes electrical contact with the first electrical contact 1101. Figure 17B, shows the top view of FIG. 17A. The first contact may also encapsulate the battery thereby protecting it from environmental degradation and damage. For example, many electrochemical devices comprise environmentally sensitive materials such as Lithium. These materials can be extremely reactive with air and moisture, and may degrade when exposed to such environments. Accordingly, the first contact 1101 may encapsulate the battery to protect it from environmentally sensitive materials in the electrochemical device from air and/or moisture.

FIG. 18A shows an exemplary embodiment of a single battery cell 1115 coupled with a second contact 1105. The second contact 1105 may also be the substrate upon which the cell is deposited. The cell structure in this embodiment comprises a cathode, and anode and an electrolyte. The electrolyte may include LIPON.

FIG. 19A shows a completed cell structure. The second contact 1105 and the cell structure 1115 from FIG. 18A are coupled with the first contact 1101 and the bonding layer 1110 as shown in 17A. Again, note how the conductor 1120 is preferably in electrical contact with the electrochemical device 1115 in a selective area. The cell is bounded by external contacts 1101 and 1105 with minimal layers there between. In this embodiment the first and second contacts 1101 and 1105 extend beyond the area of the electrochemical device 1115.

The first and second contacts 1101, 1105 of this embodiment can be made of a conductive metal. For example, the contact or contacts may be made of gold, platinum, stainless steel, titanium, zirconium, cobalt, aluminum, indium, nickel, copper, silver, carbon, bronze, brass, beryllium, or oxides, nitrides, and alloys thereof. Other conductive materials may also be used.

While the above examples show a conductive material 1120-1123 provided in an opening in the bonding layer 1110, such as the slit 1130 shown in Figure 13b, it should be appreciated that electrical contact between the cell structure 1115 and first electrical contact 1101 may be provided by a number of other ways. For example, electrical conduction between the cell structure 1115 and the first contact 1101 may be provided by embedding a conductive powder within an adhesive forming the bonding layer 1110. For example, a conductive powder such as a metallic powder (e.g., nickel powder) can be embedded in an adhesive bonding layer 1110 at one or more selected areas within an adhesive bonding layer 1110 and between the contact 1101 and the cell structure 1115. Those skilled in the art will appreciate other conductive materials that may be provided for the selective conduction, such as conductive balls, slugs, wiring mesh etc. selectively provided within an adhesive. The ways to achieve electrical conduction between the cell structure 1115 and the first contact 1101, and yet provide insulation between the two contacts 1101, 1105, should not be considered as limited to the examples explained herein.

The embodiments described above are exemplary only. One skilled in the art may recognize variations from the embodiments specifically described here, which are intended to be within the scope of this disclosure. As such, the invention is limited only by the following claims. Thus, it is intended that the present invention cover the modifications of this invention provided they come within the scope of the appended claims.

## Claims

1. A battery comprising:
a first electrical contact;
a bonding layer coupled with said first contact and comprising means for conducting between said bonding layer and first electrical contact.
at least one cell structure; and
a second electrical contact,
wherein said bonding layer and said at least one cell structure are sandwiched between said first and second electrical contacts; wherein said bonding layer comprises means for conducting through said bonding layer between said cell structure and said first electrical contact; and wherein the bonding layer comprises an electrically insulating material and an electrical conductor placed within the insulating material and contacting said first electrical contact.

2. The battery of claim 1, wherein said cell structure is in selective electrical contact with said first electrical contact via said electrical conductor.

3. The battery of claim 1 or 2, wherein said first electrical contact further comprises a metal, wherein the first electrical contact and second electrical contact encapsulate the cell structure, and/or wherein said second electrical contract further comprises a substrate.

4. The battery of any one of claims 1 to 3, wherein said bonding layer comprises a material selected from the group comprising an adhesive material, an insulating material, plastic, glass, Poly-paraphenylene terephthalamide, reinforcement materials, and fiberglass.

5. The battery of any one of claims 1 to 4, wherein said conductive means is selected from the group consisting of a tab, a wire, multiple wires, a wire mesh, perforated metal, a metal coating applied to an adhesive layer, and a disk, or combinations thereof.

6. The battery of any one of claims 1 to 5 wherein said conductive means is an embedded conductor.

7. The battery of any one of claims 1 to 6, wherein said conductive means comprises a material selected from the group consisting of gold, platinum, stainless steel, titanium, zirconium, cobalt, aluminum, indium, nickel, copper, silver, carbon, bronze, brass, beryllium, and oxides, nitrides, and alloys thereof.

8. The battery of any one of claims 1 to 7, wherein said cell structure comprises:
an anode;
an electrolyte; and
a cathode.

9. The battery of any one of claims 1 to 8, further comprising a contact area in said first and or said second electrical contact, said contact area in said first and or said second electrical contact preferably further comprising a lead extending from said first and/or second contact.

10. The battery of any one of claims 1 to 9, wherein said first and/or said second contact comprises a metal foil.

11. The battery of any one claims 1 to 10, further comprising at least one second cell structure, in particular with at least one notch in each second cell structure and said cell structures being stacked one upon another with at least one metal foil partially encapsulating each second cell structure.

12. A method of manufacturing a battery according to any one of claims 1 to 11 comprising:
creating a selectively conductive bonding layer;
coupling said bonding layer with a first electrical contact;
coupling a first side of a cell structure with a second electrical contact; and
coupling a second side of said cell structure with said bonding layer.

13. The method of claim 12, wherein said creating a selectively conductive bonding layer further comprises embedding a conductor within said bonding layer, in particular by heating the bonding layer and compressing the conductor within said bonding layer.

14. The method of claim 12 or 13, further comprising forming a lead from said first side of said cell structure and/or from said second side of said cell structure.

## Patentansprüche

1. Batterie umfassend:
einen ersten elektrischen Kontakt;
eine Verbindungsschicht, die mit dem ersten Kontakt gekoppelt ist und Mittel umfasst zum Leiten zwischen der Verbindungsschicht und dem ersten elektrischen Kontakt;
zumindest eine Zellenstruktur; und
einen zweiten elektrischen Kontakt,
wobei die Verbindungsschicht und die zumindest eine Zellenstruktur zwischen dem ersten und dem zweiten elektrischen Kontakt liegen; wobei die Verbindungsschicht Mittel umfasst zum Leiten durch die Verbindungsschicht zwischen der Zellenstruktur und dem ersten elektrischen Kontakt; und wobei die Verbindungsschicht ein elektrisch isolierendes Material und einen elektrischen Leiter umfasst, der innerhalb des Isoliermaterials platziert ist und den ersten elektrischen Kontakt kontaktiert.

2. Batterie nach Anspruch 1, wobei die Zellenstruktur in wahlweisem elektrischem Kontakt mit dem ersten elektrischen Kontakt über den elektrischen Leiter ist.

3. Batterie nach Anspruch 1 oder 2, wobei der erste elektrische Kontakt ferner ein Metall umfasst, wobei der erste elektrische Kontakt und der zweite elektrische Kontakt die Zellenstruktur einkapseln und/oder wobei der zweite elektrische Kontakt ferner ein Substrat umfasst.

4. Batterie nach irgendeinem der Ansprüche 1 bis 3, wobei die Verbindungsschicht ein Material umfasst, welches aus der Gruppe ausgewählt wird, die umfasst: ein Klebematerial, ein Isoliermaterial, Kunststoff, Glas, Polyparaphenylenterephthalamid, Verstärkungsmaterialien und Glasfaser.

5. Batterie nach irgendeinem der Ansprüche 1 bis 4, wobei das leitende Mittel aus der Gruppe ausgewählt wird, die besteht aus: einer Lasche, einem Kabel, mehreren Kabeln, einem Kabelnetz, perforiertem Metall, einer Metallbeschichtung, die auf eine Klebschicht angewandt wird, und einer Scheibe, oder Kombinationen davon.

6. Batterie nach irgendeinem der Ansprüche 1 bis 5, wobei das leitende Mittel ein eingebetteter Leiter ist.

7. Batterie nach irgendeinem der Ansprüche 1 bis 6, wobei das leitende Mittel ein Material umfasst, welches aus der Gruppe ausgewählt wird, die besteht aus: Gold, Platin, rostfreiem Stahl, Titan, Zirkonium, Kobalt, Aluminium, Indium, Nickel, Kupfer, Silber, Kohlenstoff, Bronze, Messing, Beryllium und Oxiden, Nitriden und Legierungen davon.

8. Batterie nach irgendeinem der Ansprüche 1 bis 7, wobei die Zellenstruktur umfasst:
eine Anode;
ein Elektrolyt; und
eine Kathode.

9. Batterie nach irgendeinem der Ansprüche 1 bis 8, ferner umfassend einen Kontaktbereich in dem ersten und/oder dem zweiten elektrischen Kontakt, wobei der Kontaktbereich in dem ersten und/oder dem zweiten elektrischen Kontakt vorzugsweise ferner eine Leitung umfasst, die sich von dem ersten und/oder zweiten Kontakt erstreckt.

10. Batterie nach irgendeinem der Ansprüche 1 bis 9, wobei der erste und/oder der zweite Kontakt eine Metallfolie umfasst.

11. Batterie nach irgendeinem der Ansprüche 1 bis 10, ferner umfassend zumindest eine zweite Zellenstruktur, insbesondere mit zumindest einer Kerbe in jeder zweiten Zellenstruktur und wobei die Zellenstrukturen übereinandergestapelt sind, wobei zumindest eine Metallfolie jede zweite Zellenstruktur teilweise einkapselt.

12. Verfahren zum Herstellen einer Batterie nach irgendeinem der Ansprüche 1 bis 11 umfassend:
Erzeugen einer selektiv leitenden Verbindungsschicht;
Koppeln der Verbindungsschicht mit einem elektrischen Kontakt;
Koppeln einer ersten Seite einer Zellenstruktur mit einem zweiten elektrischen Kontakt; und
Koppeln einer zweiten Seite der Zellenstruktur mit der Verbindungsschicht.

13. Verfahren nach Anspruch 12, wobei das Erzeugen einer selektiv leitenden Verbindungsschicht ferner Einbetten eines Leiters innerhalb der Verbindungsschicht umfasst, insbesondere durch Erwärmen der Verbindungsschicht und Komprimieren des Leiters innerhalb der Verbindungsschicht.

14. Verfahren nach Anspruch 12 oder 13, ferner umfassend Bilden einer Leitung von der ersten Seite der Zellenstruktur und/oder von der zweiten Seite der Zellenstruktur.

## Revendications

1. Une batterie comprenant :
un premier contact électrique ;
une couche de liaison couplée audit premier contact et
comprenant des moyens de conduction entre ladite couche de liaison et le premier contact électrique ;
au moins une structure de cellule ; et
un second contact électrique,
dans laquelle ladite couche de liaison et ladite au moins une structure de cellule sont prises en sandwich entre lesdits premier et second contacts électriques ; dans laquelle ladite couche de liaison comprend des moyens de conduction au travers de ladite couche de liaison entre ladite structure de cellule et ledit premier contact électrique ; et dans laquelle la couche de liaison comprend un matériau électriquement isolant et un conducteur électrique placé au sein du matériau isolant et venant en contact avec ledit premier contact électrique.

2. La batterie de la revendication 1, dans laquelle ladite structure de cellule est en contact électrique sélectif avec ledit premier contact électrique via ledit conducteur électrique.

3. La batterie de la revendication 1 ou 2, dans laquelle ledit premier contact électrique comprend en outre un métal, dans laquelle le premier contact électrique et le second contact électrique encapsulent la structure de cellule et/ou dans laquelle ledit second contact électrique comprend en outre un substrat.

4. La batterie de l'une des revendications 1 à 3, dans laquelle ladite couche de liaison comprend un matériau choisi dans le groupe constitué par un matériau adhésif, un matériau isolant, du plastique, du verre, du téréphthalamide de polyparaphénylène, des matériaux de renfort et de la fibre de verre.

5. La batterie de l'une des revendications 1 à 4, dans laquelle lesdits moyens conducteurs sont choisis dans le groupe constitué par une pâte, un fil, des fils multiples, une tresse de fils, du métal perforé, un revêtement métallique appliqué sur une couche adhésive, un disque, ou des combinaisons des précédents.

6. La batterie de l'une des revendications 1 à 5, dans laquelle lesdits moyens conducteurs sont un conducteur incorporé.

7. La batterie de l'une des revendications 1 à 6, dans laquelle lesdits moyens conducteurs comprennent un matériau choisi dans le groupe constitué par l'or, le platine, l'acier inoxydable, le titane, le zirconium, le cobalt, l'aluminium, l'indium, le nickel, le cuivre, l'argent, le carbone, le bronze, le laiton, le béryllium, et leurs oxydes, nitrures et alliages.

8. La batterie de l'une des revendications 1 à 7, dans laquelle ladite structure de cellule comprend :
une anode ;
un électrolyte ; et
une cathode.

9. La batterie de l'une des revendications 1 à 8, comprenant en outre une surface de contact dans ledit premier et/ou ledit second contact électrique, ladite surface de contact dans ledit premier et/ou ledit second contact électrique comprenant de préférence en outre un fil s'étendant à partir dudit premier et/ou second contact.

10. La batterie de l'une des revendications 1 à 9, dans laquelle ledit premier contact et/ou ledit second contact comprennent une feuille de métallique.

11. La batterie de l'une des revendications 1 à 10, comprenant en outre au moins une seconde structure de cellule, en particulier avec au moins une encoche dans chaque seconde structure de cellule et lesdites structures de cellule étant empilées les unes sur les autres avec au moins une feuille métallique encapsulant partiellement chaque seconde structure de cellule.

12. Un procédé de fabrication d'une batterie selon l'une des revendications 1 à 11, comprenant :
la création d'une couche de liaison sélectivement conductrice ;
le couplage de ladite couche de liaison à un premier contact électrique ;
le couplage d'un premier côté d'une structure de cellule à un second contact électrique ; et
le couplage d'un second côté de ladite structure de cellule à ladite couche de liaison.

13. Le procédé de la revendication 12, dans lequel ladite création d'une couche de liaison sélectivement conductrice comprend l'incorporation d'un conducteur au sein de ladite couche de liaison, en particulier par chauffage de la couche de liaison et compression du conducteur au sein de ladite couche de liaison.

14. Le procédé de la revendication 12 ou 13, comprenant en outre la formation d'un fil à partir dudit premier côté de ladite structure de cellule et/ou à partir dudit second côté de ladite structure de cellule.
